(19) Europäisches Patentamt

European Patent Office

Office européen des brevets

(11) **EP 1 712 604 A1**

(12) **EUROPEAN PATENT APPLICATION**
published in accordance with Art. 158(3) EPC

(43) Date of publication:
**18.10.2006 Bulletin 2006/42**

(51) Int Cl.:
**C09J 123/26** (2006.01)    **C09J 151/06** (2006.01)
**B60J 1/00** (2006.01)

(21) Application number: **05709702.4**

(22) Date of filing: **03.02.2005**

(86) International application number:
**PCT/JP2005/001609**

(87) International publication number:
**WO 2005/075596 (18.08.2005 Gazette 2005/33)**

(84) Designated Contracting States:
**AT BE BG CH CY CZ DE DK EE ES FI FR GB GR HU IE IS IT LI LT LU MC NL PL PT RO SE SI SK TR**

(30) Priority: **03.02.2004 JP 2004026710**

(71) Applicants:
• **Asahi Glass Company, Limited
Chiyoda-ku, Tokyo 100-8405 (JP)**
• **TOYO KASEI KOGYO COMPANY LIMITED
Osaka-shi, Osaka 530-0004 (JP)**

(72) Inventors:
• **KASAHARA, Takayuki;
c/o Asahi Glass Company,
Aichi;4702514 (JP)**

• **SHIBUYA, Yasuhiro;
c/o Asahi Glass Company,
Aichi, 4702514 (JP)**
• **MAZAKI, Hiroaki;
c/o Asahi Glass Company, Limited
Aichi, 4702514 (JP)**
• **TSUNEKA, Tatsuo;
c/o Toyo Kasei Kogyo Company,Ltd
Chuo-ku,
Tokyo, 1030016 (JP)**
• **KINOSADA, Masaji;
c/o Toyo Kasei Kogyo Company,
Hyogo, 6760082 (JP)**

(74) Representative: **Müller-Boré & Partner
Patentanwälte
Grafinger Strasse 2
81671 München (DE)**

(54) **ADHESIVE COMPOSITION AND GLASS PLATE WITH MOLDING MADE OF THERMOPLASTIC ELASTOMER**

(57)    A chlorine-free adhesive composition of the present invention for use in the adhesion of a thermoplastic elastomer and a glass article, which comprises a modified polyolefin having a propylene-$\alpha$-olefin copolymer as the main chain and at least one member selected from an $\alpha,\beta$-unsaturated carboxylic acid and an acid anhydride thereof, in a side chain, provides a sufficient adhesiveness between the thermoplastic elastomer and the glass. Further, a glass plate with a molding made of a thermoplastic elastomer, employing the chlorine-free adhesive composition, is provided.

## Fig. 1

**Description**

TECHNICAL FIELD

The present invention relates to an adhesive composition and a glass plate with a molding made of a thermoplastic elastomer. Particularly, it relates to a chlorine-free adhesive composition excellent in the adhesiveness between a thermoplastic elastomer and a glass article, and a glass plate with a molding made of a thermoplastic elastomer, employing such a chlorine-free adhesive composition.

BACKGROUND ART

A window glass plate for an automobile is integrated with a resin or rubber component which is present between the glass plate and the body of the automobile for sealing between them and which also has a function such as a decoration function as the case requires. The component having such a function is called by various names such as a molding, a frame, a gasket, a mall, etc., but is generally referred to as a molding in this specification.
Heretofore, a polyvinyl chloride has been used in many cases as such a molding material, since it is excellent in abrasion resistance and moldability. However, in recent years, from the viewpoint of environmental protection, it has become common to employ a thermoplastic elastomer containing no chlorine atom, as represented by a thermoplastic polyolefin or the like. However, the thermoplastic elastomer is poor in the adhesiveness of the surface or in the polarity, whereby the adhesion of the thermoplastic elastomer with glass is not easy. Therefore, a chlorine-type adhesive composition such as a chlorinated polyolefin excellent in the adhesive strength although it contains chlorine atoms, is still being used as an adhesive composition for use in the integration (adhesion) of a molding and a window glass plate of an automobile. Accordingly, it is desired to use a chlorine-free adhesive composition comprising a component containing no chlorine atoms, instead of such a chlorine-type adhesive composition such as a chlorinated polyolefin, as an adhesive composition, also from the viewpoint of reinforcing environmental protection.
As such a chlorine-free adhesive composition, AUROREN (registered trademark) i.e. an adhesive composition containing a maleic anhydride/(meth)acryl-modified amorphous polyolefin is, for example, known (Shunji Sekiguchi "Plastics Age", Kabushiki Kaisha Plastic Age, March 2003, vol. 49, No. 3, p. 115-119, hereinafter referred to as "Document 1"). Document 1 discloses that "AUROREN containing a component having an amorphous polyolefin as the basic skeleton, exhibits an excellent adhesiveness to a polyolefin such as polypropylene".

DISCLOSURE OF THE INVENTION

PROBLEMS TO BE SOLVED BY THE INVENTION

As an index for the adhesive strength of an adhesive, the initial adhesive strength may be mentioned. In addition, durable adhesive strengths such as heat resistance, moisture resistance, warm water resistance, hot water resistance and weather resistance may be mentioned. An adhesive to be used for automobile components is required to satisfy various durable adhesive strengths (durable adhesive properties) to cope with severe environmental conditions in use.
However, in a case where the above-mentioned chlorine-free adhesive composition or the like is to be used for an automobile component having a thermoplastic elastomer and glass bonded to each other, there is a problem that depending upon the thermoplastic elastomer, no adequate adhesive strength is obtainable even at the initial stage before measuring the durable adhesive strengths (before carrying out the durability tests).
Namely, in various industrial fields, a chlorine-free adhesive composition to be used for bonding a thermoplastic elastomer and glass, is desired, and particularly in the automobile industry, a composition which has high initial strength and various durable adhesive strengths and which provides adequate adhesive properties, is desired.
Under the circumstances, it is an object of the present invention to provide a chlorine-free adhesive composition which provides adequate adhesive properties between a thermoplastic elastomer and glass.
Further, another object is to provide a glass plate with a thermoplastic elastomer molding employing the chlorine-free adhesive composition.
Here, the chlorine-free means that a starting material in which chlorine is intentionally incorporated, is not used, and chlorine is not contained other than one to be included as an unavoidable impurity.

MEANS TO SOLVE THE PROBLEMS

The present inventors have conducted an extensive study on a chlorine-free adhesive composition and have found that an adhesive composition comprising a modified polyolefin obtained by graft-copolymerizing an $\alpha,\beta$-unsaturated carboxylic acid or an acid anhydride thereof to a propylene-$\alpha$-olefin copolymer, provides adequate adhesive properties between a thermoplastic elastomer and glass. The present invention has been accomplished on the basis of this discovery.

Namely, the present invention provides the following (1) and (2).

(1) An adhesive composition for use in the adhesion of a thermoplastic elastomer and a glass article, which comprises a modified polyolefin obtained by graft-copolymerizing at least one member selected from an $\alpha,\beta$-unsaturated carboxylic acid and an acid anhydride thereof (hereinafter referred to simply as "the unsaturated carboxylic acid, etc."), to a propylene-$\alpha$-olefin copolymer.

In the adhesive composition according to the above (1), the content of propylene units in the propylene-$\alpha$-olefin copolymer is preferably at least 50 mol%, whereby a higher adhesive strength may be obtained.

In the adhesive composition according to the above (1), the weight-average molecular weight of the modified polyolefin is preferably from 10,000 to 100,000, and its crystallinity is preferably from 10 to 70%.

The amount of modification by the unsaturated carboxylic acid, etc., of the above modified polyolefin, is preferably such that the amount of the unsaturated carboxylic acid, etc. grafted is from 0.1 to 10 parts by mass per 100 parts by mass of the modified polyolefin. Further, the modified polyolefin preferably has a melting temperature (Tm) of at least 90°C, whereby when formed into a composition, the heat resistance will be excellent.

When the thermoplastic elastomer is to be bonded to the glass article, it is preferred to employ a glass primer as a primer agent, whereby the adhesive strength will be excellent. Such a glass primer is preferably a urethane type glass primer containing a compound having isocyanate groups and/or urea groups.

On the other hand, when the thermoplastic elastomer is to be bonded to the glass article, in a case where no glass primer is employed, it is preferred to incorporate a silane coupling agent to the adhesive composition according to the above (1), whereby the adhesive strength will be excellent. The content of the silane coupling agent is preferably from 0.1 to 30 parts by mass per 100 parts by mass of the above modified polyolefin.

Further, it is preferred to use the above-mentioned glass primer and the silane coupling agent in combination, whereby the durable adhesive strengths will be excellent.

(2) A glass plate with a molding made of a thermoplastic elastomer, which comprises a glass plate and a molding made of a thermoplastic elastomer, integrated to a peripheral portion of the glass plate, via an adhesive layer formed from the adhesive composition as defined in the above (1).

Here, the molding made of a thermoplastic elastomer is preferably one formed by extrusion or injection molding, whereby the production is easy.

Further, the above glass plate is preferably a window glass plate for an automobile.

Also in the glass plate with a molding made of a thermoplastic elastomer, it is preferred to employ a glass primer, and in a case where no glass primer is employed, it is preferred to incorporate a silane coupling agent to the adhesive composition. Further, it is preferred to use the above glass primer and the silane coupling agent in combination, whereby the durable adhesive strengths will be excellent.

EFFECTS OF THE INVENTION

According to the above (1), the present invention is capable of providing a chlorine-free adhesive composition which is useful for bonding a thermoplastic elastomer and glass and which has high initial adhesive strength and durable adhesive strengths and thus provides adequate adhesive properties.

Further, according to the above (2), the present invention is capable of providing a glass plate with a molding made of a thermoplastic elastomer firmly bonded and having adequate durable adhesive strengths. Further, the glass plate with a molding made of a thermoplastic elastomer has adequate durable adhesive strength as mentioned above, and thus is useful particularly for e.g. an automobile component to be used in a severe environment.

BRIEF DESCRIPTION OF DRAWINGS

Fig. 1 is a schematic cross-sectional view illustrating an embodiment of the glass plate with a molding made of a thermoplastic elastomer of the present invention.

Fig. 2 is a view illustrating an embodiment for the production of a glass plate with a molding made of a thermoplastic elastomer by injection molding.

Fig. 3 is a view illustrating an embodiment for the production of a glass plate with a molding made of a thermoplastic elastomer by extrusion.

Fig. 4 is a top view illustrating the shape and size of a test specimen to be used for an evaluation test (a peel strength test).

Fig. 5 is a schematic side view illustrating the shape and size of a test specimen to be used for an evaluation test (a peel strength test).

BEST MODE FOR CARRYING OUT THE INVENTION

The present invention provides an adhesive composition for use in the adhesion of a thermoplastic elastomer and a glass article, which comprises a modified polyolefin obtained by graft-copolymerizing at least one member selected from an $\alpha,\beta$-unsaturated carboxylic acid and an acid anhydride thereof, to a propylene-$\alpha$-olefin copolymer (hereinafter referred to simply as "the composition of the present invention").

The modified polyolefin contained in the composition of the present invention has a propylene-$\alpha$-olefin copolymer as the main chain.

Such a propylene-$\alpha$-olefin copolymer is not particularly limited with respect to its structure, physical properties, etc., so long as it is one obtained by copolymerizing propylene with an $\alpha$-olefin other than propylene.

The content of propylene units in the propylene-$\alpha$-olefin copolymer is not particularly limited, but the content represented by the following formula is preferably at least 50 mol%.

$$\text{Content (mol\%)} = [\text{Molar amount of propylene units/}$$
$$\text{Molar amount of total units]} \times 100$$

When the content is at least 50 mol%, an adequate cohesive strength of the propylene-$\alpha$-olefin copolymer can be obtained, and the adhesive properties between a thermoplastic elastomer (particularly an olefin type thermoplastic elastomer) and glass will be excellent. From the viewpoint of excellent adhesive properties, the content is more preferably at least 60 mol%.

The $\alpha$-olefin other than propylene to be used for the propylene-$\alpha$-olefin copolymer is not particularly limited, and it may, for example, be ethylene, 1-butene, 1-heptene, 1-octene or 4-methyl-1-pentene. Among them, 1-butene is preferred, whereby the adhesive properties will be excellent. Such $\alpha$-olefins may be incorporated alone or in combination as a mixture of two or more of them.

Further, the copolymer may contain, in addition to units of propylene and units of an $\alpha$-olefin other than propylene, units of other monomers within a range not to impair the purpose of the present invention.

The propylene-$\alpha$-olefin copolymer may have substituents within a range not to impair the purpose of the present invention.

The propylene-$\alpha$-olefin copolymer may be obtained by carrying out copolymerization by using propylene, an $\alpha$-olefin, optionally other monomers, a radical polymerization initiator, etc., and by optionally selecting common copolymerization methods and conditions.

The physical properties such as the weight-average molecular weight, melting temperature (Tm) and crystallinity, of the propylene-$\alpha$-olefin copolymer, are not particularly limited, but they are preferably those which satisfy the after-mentioned respective physical properties as a modified polyolefin.

Such propylene-$\alpha$-olefin copolymers may be used alone or in combination as a mixture of two or more of them, as the main chain of the modified polyolefin.

The side chain of the modified polyolefin is formed from at least one member selected from an $\alpha,\beta$-unsaturated carboxylic acid and an acid anhydride thereof. Such a side chain may be formed solely from the unsaturated carboxylic acid, etc., or may be formed by bonding of the unsaturated carboxylic acid, etc. to another organic group.

The $\alpha,\beta$-unsaturated carboxylic acid is not particularly limited, and it may, for example, be maleic acid, fumaric acid, itaconic acid or citraconic acid, and the acid anhydride of an $\alpha,\beta$-unsaturated carboxylic acid may, for example, be maleic anhydride, itaconic anhydride or citraconic anhydride.

Among them, an acid anhydride of an $\alpha,\beta$-unsaturated carboxylic acid is preferred, and maleic anhydride is particularly preferred, whereby the adhesive properties will be excellent.

The amount of modification by the unsaturated carboxylic acid, etc. is preferably such that the mass of the unsaturated carboxylic acid, etc. to be introduced is from 0.1 to 10 parts by mass per 100 parts by mass of the modified polyolefin. If the amount of modification is at least 0.1 part by mass, the chemical bond strength with the glass primer and/or the silane coupling agent will be strong, and an adequate adhesive strength will be obtained. If the amount of modification is at most 10 parts by mass, the polarity of the modified polyolefin will be good, and the adhesive strength with a thermoplastic elastomer will be excellent. The amount of modification is more preferably from 1 to 5 parts by mass, whereby such a balance will be better. Further, it is preferably at most 3 parts by mass, whereby the synthesis will be easy.

The modified polyolefin to be used in the present invention is produced by a production method which comprises graft-copolymerizing at least one member selected from the α,β-unsaturated carboxylic acid, etc. to a propylene-α-olefin copolymer.

The method of graft-copolymerizing the unsaturated carboxylic acid, etc. to a propylene-α-olefin, is not particularly limited. For example, a common copolymerization method such as a solution method or a melting method may optionally be selected for use.

As a solution method, a method may for example, be mentioned wherein a propylene-α-olefin is dissolved in an aromatic organic solvent such as toluene at a temperature of from 100 to 180°C, then the unsaturated carboxylic acid, etc. are added, and further, the after-mentioned radical-forming agent is added all at once or dividedly in a few times to carry out the copolymerization.

As a melting method, a method may, for example, be mentioned wherein a propylene-α-olefin is heated at a temperature higher than the melting temperature thereof and melted, and then, the unsaturated carboxylic acid, etc. and the after-mentioned radical-forming agent are added to carry out the copolymerization.

The radical-forming agent to be used for the graft-copolymerization is not particularly limited, and, for example, benzoyl peroxide, dicumyl peroxide or di-tert-butyl peroxide may be mentioned. It is selected for use taking into consideration the copolymerization reaction temperature and the decomposition temperature of the radical-forming agent.

The modified polyolefin thus obtained preferably has a weight-average molecular weight of from 10,000 to 100,000. When the weight-average molecular weight is at least 10,000, the cohesive strength as the adhesive composition will be strong, and an adequate adhesive strength can be obtained. Further, when the weight-average molecular weight is at most 100,000, the solubility of the modified polyolefin in the after-mentioned organic solvent will be high, whereby the solution will have a sufficient fluidity at room temperature to provide a good operation efficiency for coating with the solution. The weight-average molecular weight is more preferably from 30,000 to 70,000, whereby the adhesive strength and the fluidity will be better.

In the present invention, the method for measuring the weight-average molecular weight is not particularly limited, but a measuring method by gel permeation chromatography (GPC) (calculated as standard polystyrene) is preferred.

The modified polyolefin preferably has a crystallinity of from 10 to 70%. When the crystallinity is at least 10%, the cohesive strength as the adhesive composition will be strong, and an adequate adhesive strength can be obtained. Further, when the crystallinity is at most 70%, a solution having the modified polyolefin dissolved will be stable and exhibits fluidity at room temperature to provide a good operation efficiency at the time of the coating, and its storage at a low temperature will be possible. The crystallinity is more preferably from 30 to 60%, whereby such properties will be better.

In the present invention, the method for measuring the crystallinity is not particularly limited, but a transmission method by X-ray diffraction is, for example, preferred.

Further, the modified polyolefin preferably has a melting temperature (Tm) of at least 90°C in that the heat resistance as an adhesive composition will be excellent.

To the composition of the present invention, in addition to the modified polyolefin, the after-mentioned silane coupling agent may be incorporated as the case requires, and other components may be incorporated within a range not to impair the purpose of the present invention. Such other components may, for example, be an antioxidant, an ultraviolet absorber, a photostabilizer, a blocking-preventive agent, carbon black, and other various additives which may be added to an adhesive as the case requires.

The composition of the present invention may be used in a state where the modified polyolefin, the after-mentioned silane coupling agent as an optional component and other components which may be added as the case requires, may simply be mixed. However, it is preferred that these components are dissolved in an organic solvent and used in the form of a solution of the adhesive composition.

The organic solvent to be used may, for example, be an aromatic hydrocarbon solvent such as toluene or xylene, an alicyclic hydrocarbon solvent such as cyclohexane, methylcyclohexane or ethylcyclohexane, an ester solvent such as ethyl acetate, isopropyl acetate or butyl acetate, or a ketone solvent such as methyl ethyl ketone or methyl isobutyl ketone. These solvents may be used alone or in combination as a mixture of two or more of them. It is particularly preferred to use methylcyclohexane and ethyl acetate as mixed, whereby a stabilized adhesive strength can be obtained.

Here, the modified polyolefin, or the sum of the modified polyolefin and the after-mentioned silane coupling agent optionally added, is preferably dissolved in an organic solvent so that the concentration will be from 5 to 30 mass%. When the concentration is at least 5 mass%, double coating will be unnecessary, and the coating step may be simplified. When the concentration is at most 30 mass%, it is readily soluble in the organic solvent, whereby an adhesive solution can easily be prepared.

The composition of the present invention is used for the adhesion of the thermoplastic elastomer and a glass article coated with a glass primer.

The thermoplastic elastomer is not particularly limited, and it may, for example, be an olefin type thermoplastic elastomer, a styrene type thermoplastic elastomer, an urethane type thermoplastic elastomer, a polyamide type thermoplastic elastomer or a 1,2-polybutadiene type thermoplastic elastomer. Among them, an olefin type thermoplastic elastomer is preferred, since it is excellent in the adhesiveness with the composition of the present invention. The olefin type thermoplastic elastomer is, for example, commercially available under a tradename such as SANTOPRENE, MILASTOMER, SUMITOMO TPE, THERMORUN, OLEFLEX, MIRAPRENE, PER, IDEMITSU TPO or SARLINK.

The glass article is not particularly limited, and it may, for example, be a glass plate or a glass rod.

The glass plate is not particularly limited, and various glass plates can be used, such as an inorganic single glass plate, a laminated glass having a plurality of glass plates laminated via an interlayer, a reinforced glass having reinforcing treatment applied, and a glass plate having various surface treatment applied, such as heat-shielding coating. Further, it is also possible to use a transparent resin plate so-called an organic glass.

The glass article may be provided with e.g. a fired body of a dark colored ceramic paste in order to prevent transmittance of ultraviolet rays.

The composition of the present invention is a composition which comprises the above-described modified polyolefin, and the method for its use is not particularly limited. However, the following three embodiments may, for example, be mentioned.

Namely, the first embodiment is an embodiment wherein a glass primer is employed for bonding the thermoplastic elastomer and glass by the composition of the present invention. The second embodiment is an embodiment wherein a silane coupling agent is further incorporated to the composition of the present invention, and the thermoplastic elastomer and glass are bonded without using a glass primer. The third embodiment is an embodiment wherein a glass primer is employed, and a silane coupling agent is further incorporated to the composition of the present invention, and a thermoplastic elastomer and glass are bonded by means of a glass primer.

In the first embodiment of bonding a thermoplastic elastomer and glass by means of the composition of the present invention, a glass primer is employed. When a glass article is coated with a glass primer, the durable adhesive strengths can be improved without impairing the initial adhesive strength.

The glass primer to be applied to the glass article is preferably a urethane type glass primer containing a compound having an isocyanate group and/or a urea group, and it may, for example, be a glass primer commercially available as product No. #435-41 from SUNSTAR ENGINEERING, INC., a glass primer commercially available as product No. MS-90 from THE YOKOHAMA RUBBER CO., LTD., or BETAPRIME (5001) or BETASEAL (43520A), commercially available from Dow·Automotive.

In the second embodiment of bonding a thermoplastic elastomer and glass by means of the composition of the present invention, a silane coupling agent is further incorporated to the composition of the present invention, whereby the modified polyolefin and the silane coupling agent will sufficiently be compatible so that the bond strength between the thermoplastic elastomer and the glass will be excellent even without using a glass primer.

The silane coupling agent is not particularly limited, and a silane coupling agent having at its terminal a functional group such as a group containing an oxirane ring (glycidyl group), a vinyl group, a thiol group or an amino group, may be mentioned. A glycidyl group-containing silane coupling agent having a glycidyl group at its terminal, is preferred, whereby the adhesive strength will be stronger.

The silane coupling agent is preferably from 0.1 to 30 parts by mass per 100 parts by mass of the modified polyolefin. When it is at least 0.1 part by mass, an adequate adhesive strength with glass can be obtained. Further, if it is at most 30 parts by mass, bonding of the silane coupling agent itself will be suppressed, and it is possible to prevent a deterioration in the adhesive properties with the thermoplastic elastomer. The silane coupling agent is more preferably at least 4 parts by mass, whereby the adhesive strength with glass can more effectively be provided. Further, the silane coupling agent is more preferably at most 20 parts by mass, whereby the production of the composition is easy.

In the third embodiment of bonding a thermoplastic elastomer and glass by means of the composition of the present invention, a glass primer is employed, and a silane coupling agent is further incorporated to the composition of the present invention, whereby the durable adhesive strengths can further be improved without impairing the initial adhesive strength. Further, as the adhesive strength becomes high, it is possible to set the preheating temperature of glass to be low at the time of bonding the thermoplastic elastomer and the glass, whereby the production time can be shortened, and the cost can be reduced.

As the glass primer, it is preferred to employ the same one as used in the above first embodiment. Further, as the silane coupling agent, it is also preferred to employ the same one as used in the above second embodiment. By using them in combination, the composition of the present invention can be crosslinked by bonding of the acid anhydride in the composition of the present invention with the epoxy group in the silane coupling agent and by the bonding of silanol groups in the silane coupling agent to one another, whereby the heat resistance can be improved. Further, the composition of the present invention and the glass primer are firmly bonded, whereby the cohesion strength between each interface and the adhesive layer will be improved.

The composition of the present invention has the above-described constitution and is a chlorine-free adhesive composition which provides adequate adhesive properties between a thermoplastic elastomer and glass, and thus, it is useful as an adhesive composition to bond a thermoplastic elastomer and glass in various industrial fields. Especially, a composition having high durable adhesive strengths among those of the present invention, is useful particularly as an adhesive composition for e.g. the automobile industry (automobile components) which is used in a severe environment.

Further, the composition of the present invention is chlorine-free adhesive composition, whereby it sufficiently satisfies the demand for environmental protection which is particularly required in recent years.

The present invention further provides a glass plate with a molding made of a thermoplastic elastomer employing the composition of the present invention.

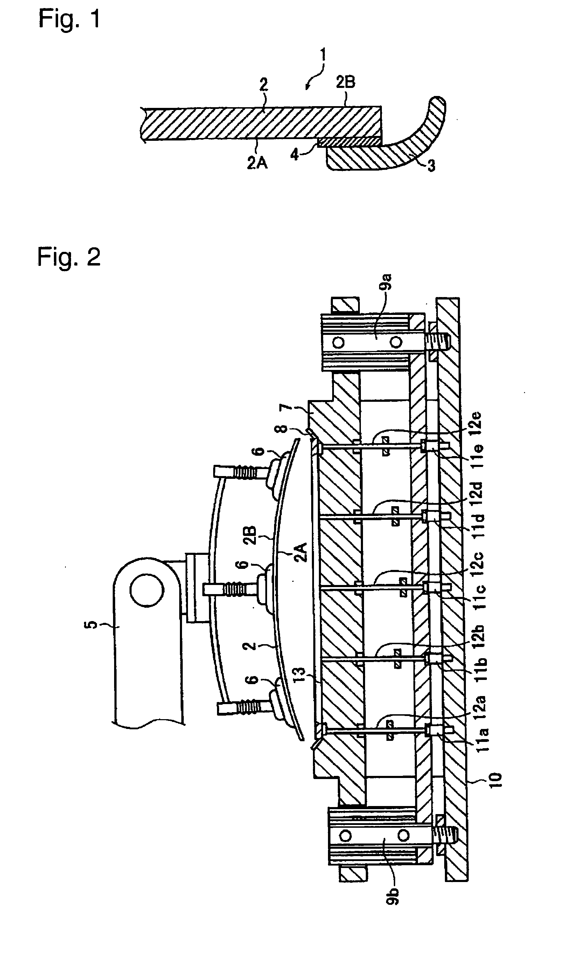

Now, with reference to Figs. 1 to 3, the glass plate with a molding made of a thermoplastic elastomer of the present invention will be described in detail.

Fig. 1 is a schematic cross-sectional view illustrating an embodiment of the glass plate with a molding made of a thermoplastic elastomer of the present invention. In Fig. 1, 1 represents a glass plate with a molding made of a thermoplastic elastomer (hereinafter sometimes referred to simply as "a glass plate with a molding"), 2 a glass plate, 2A a rear surface, 2B a front surface, 3 a molding made of a thermoplastic elastomer, and 4 an adhesive layer. The glass plate 1 with a molding made of a thermoplastic elastomer is one wherein a glass plate 2 having a front surface 2B and a rear surface 2A, and a molding 3 made of a thermoplastic elastomer are integrated via an adhesive layer 4.

The molding 3 made of a thermoplastic elastomer is preferably formed by a resin-molding method such as injection molding or extrusion. As an injection molding method, it is possible to employ, for example, a method for integrally forming the molding 3 made of a thermoplastic elastomer along the peripheral portion of a glass plate 2 by injection integral molding, wherein in a molding tool having an engraving which substantially corresponds to the shape of the molding 3 made of a thermoplastic elastomer, the glass plate 2 is placed and clamped to form a cavity space by the engraving and the peripheral portion of the glass plate 2, and a resin material is injected into the cavity space of the molding tool. In such a case, before placing the glass plate 2 in the molding tool, the composition of the present invention is preliminarily applied to form an adhesive layer 4 along the peripheral portion of the glass plate 2 to which the molding 3 made of a thermoplastic elastomer is to be integrated.

Here, the thermoplastic elastomer to form the molding made of a thermoplastic elastomer, is as described above. To such a thermoplastic elastomer, various additives which are commonly employed, may be incorporated.

Otherwise, it is possible to employ a method wherein the molding 3 made of a thermoplastic elastomer is once formed by injection molding, into a loop-shape so that it can be bonded along the entire periphery of the glass plate or into a ⊐-shape so that it can be bonded not along the entire periphery of the glass plate but along part thereof, e.g. along three sides thereof, and the formed molding 3 made of a thermoplastic elastomer is pressed to the glass plate 2 so that the molding 3 made of a thermoplastic elastomer is integrated to the glass plate 2. In such a case, before pressing the molding 3 made of a thermoplastic elastomer along the peripheral portion of the glass plate 2, the composition of the present invention is applied to the peripheral portion of the glass plate 2, or the composition of the present invention may be applied to the surface to be bonded to the glass plate 2, of the molding 3 made of a thermoplastic elastomer.

Fig. 2 shows another method wherein a glass plate with a molding made of a thermoplastic elastomer is produced by utilizing injection molding. In Fig. 2, 2 represents a glass plate, 2A its rear surface, 2B its front surface, 5 a holding machine, 6 a suction disk, 7 a first mold, 8 a molding made of a thermoplastic elastomer, 9a and 9b cylinders, 10 a lifting member, 11a, 11b, 11c, 11d and 11e stoppers, 12a, 12b, 12c, 12d and 12e projection pins, and 13 a cavity wall.

In the method shown in Fig. 2, the composition of the present invention is preliminarily applied to form an adhesive layer along the peripheral portion of the rear surface 2A of the glass plate 2, and at the same time, the glass plate 2 is preheated and then the surface 2B of the glass plate 2 is suctioned by the suction disks 6 of the holding machine 5 to hold the glass plate 2. On the other hand, a molten thermoplastic elastomer is injected into a cavity formed by the lower first mold 7 and an upper second mold (not shown), to form a molding 8 made of the thermoplastic elastomer, and then the upper second mold is removed by mold opening, to expose the surface to be bonded, of the molding 8 made of the thermoplastic elastomer, and at the same time, the holding machine 5 is operated to have the rear surface 2A of the glass plate 2 disposed to face the molding 8 made of the thermoplastic elastomer.

Then, the respective cylinders 9a and 9b are driven in synchronization to lift the lifting member 10. The lifting member 10 lifts the respective projection pins 12a, 12b, 12c, 12d and 12e via the respective stoppers 11a, 11b, 11c, 11d and 11e to let the forward ends of the projection pins 12a, 12b, 12c, 12d and 12e project from the cavity wall 13 of the first mold 7. The molding 8 made of the thermoplastic elastomer is thereby pushed towards the rear surface 2A of the glass plate 2 and simultaneously pressed against the entire edge of the glass plate 2 for temporary bonding.

Then, by the holding machine 5, the temporarily bonded glass plate 2 and molding 8 of the thermoplastic elastomer are moved to the main bonding table, whereupon the molding 8 made of the thermoplastic elastomer is placed on the pressing surface of the main bonding table, followed by pressing under a constant pressure for a predetermined period of time by the holding machine 5 to obtain the glass plate provided with the molding. As such a method, a method disclosed in JP-A-2000-79626 may, for example, be mentioned.

As a method for forming the molding by extrusion, a method may be mentioned wherein a resin material is extruded from and shaped by an extrusion die having an opening which substantially corresponds to the cross-sectional shape of the molding. Here, (a) immediately after extruded from the extrusion die, the molding made of the thermoplastic elastomer is pressed and integrated to the peripheral portion of the glass plate, or (b) the molding of the thermoplastic elastomer may be extruded from the extrusion die directly along the peripheral portion of the glass plate for integration. In either method, it is possible to employ a method of preliminarily applying the composition of the present invention to the peripheral portion of the glass plate to form an adhesive layer.

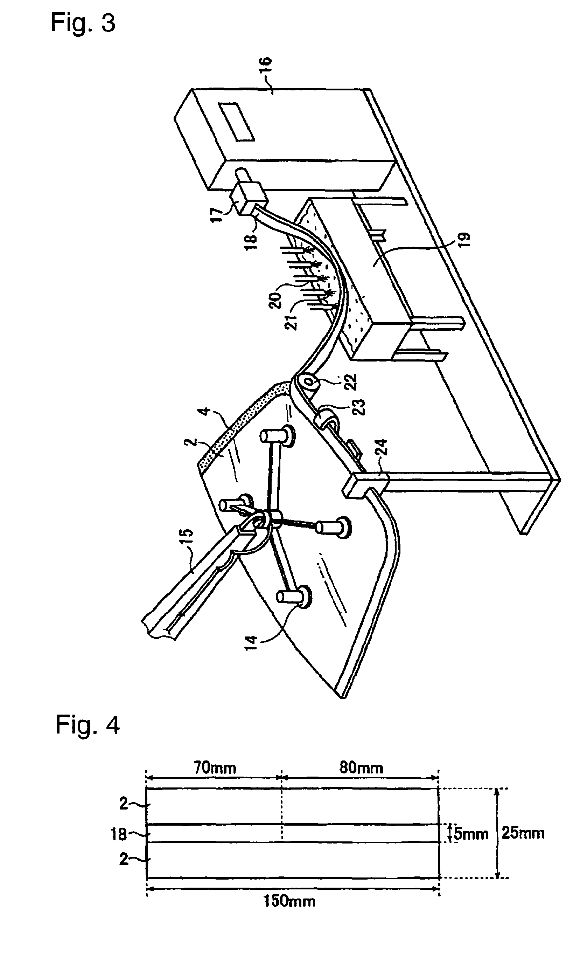

As a specific example of the method wherein (a) immediately after extruded from the extrusion die, the molding made of the thermoplastic elastomer is pressed and integrated to the peripheral portion of the glass plate, the method schematically shown in Fig. 3 may be mentioned. In Fig. 3, 2 represents the glass plate, 4 an adhesive layer, 14 a suction pad, 15 a robot arm, 16 an extruder, 17 an extrusion die, 18 the molding made of the thermoplastic elastomer, 19 a cooling water tank, 20 a cooling spray, 21 cooling water, 22 a holding roller, 23 a heating device and 24 a pressing member. In the method shown in Fig. 3, along the peripheral portion of the glass plate 2, the composition of the present invention is preliminarily applied and dried to form an adhesive layer 4. The glass plate 2 having the adhesive layer 4 thus formed, is held by a robot (provided with suction pads 14 and a robot arm 15) and made to be movable for a predetermined movement. At the forward end of the extruder 16, an extrusion die 17 having an opening which substantially corresponds to the cross-sectional shape of the molding 18 made of the thermoplastic elastomer, is provided.

The molding 18 made of the thermoplastic elastomer extruded from the extrusion die 17 is cooled by water (19 represents a cooling water tank, 20 a cooling spray, and 21 cooling water). The cooled molding 18 made of the thermoplastic elastomer is passed through the holding roller 22, and the surface facing the glass plate 2 is heated by the heating device 23, whereupon it is introduced into the pressing member 24. The pressing member 24 has a cavity, into which the molding 18 made of the thermoplastic elastomer and the peripheral portion of the glass plate 2 are to be introduced and is designed to press and bond the molding 18 made of the thermoplastic elastomer to the glass plate 2 as the peripheral portion of the glass plate 2 and the molding 18 made of the thermoplastic elastomer pass through the cavity. The glass plate 2 can be relatively movable to the pressing member 24 by the driving of the robot, so that the pressing member 24 is along with the peripheral portion of the glass plate 2. Thus, it is possible to produce a glass plate with a molding made of a thermoplastic elastomer, having the molding 18 made of the thermoplastic elastomer integrated along the peripheral portion of the glass plate 2. Such a production method is described in further detail in JP-A-2004-240122.

The glass plate in the glass plate provided with a molding made of a thermoplastic elastomer of the present invention, is as described above.

In the present invention, the shape of the molding made of a thermoplastic elastomer may optionally be determined depending upon the required performance or the specification of the design. For example, a shape such as a loop-shape or a ⊐-shape may be mentioned, and it may be one having the same cross-sectional shape over the entire periphery of the glass plate, or one having different cross-sectional shapes depending upon the particular portions. Further, it may be integrated over the entire periphery of the glass plate, or may be integrated along a specific side or portion of the glass plate.

Although not shown in the drawings, in the glass plate with a molding made of a thermoplastic elastomer of the present invention, for example, in Fig. 1, at the region along the glass plate 2 where the adhesive layer 4 is to be formed, a fired product of a dark ceramic paste may be formed on the inside surface 2A of the glass plate between the inside surface and the adhesive layer 4. By the fired product of the dark ceramic paste, the adhesive layer 4 is hidden from the exterior of the car, and transmission of ultraviolet rays to the interior of the car can be prevented. The glass plate with a molding made of a thermoplastic elastomer is usually fixed to a car body (not shown) by an urethane adhesive, and the fired product of a dark ceramic paste can prevent deterioration of the urethane adhesive by ultraviolet rays. If the ultraviolet ray durability is sufficient, it is possible that a pigment, dye or the like may be added to the adhesive layer 4 to let it function as a covering layer to prevent irradiation of ultraviolet rays to the adhesive for the bonding to the car body.

Such a glass plate with a molding made of a thermoplastic elastomer of the present invention is useful in various industrial fields and can be preferably used for a window of various vehicles and can be used particularly preferably for a window of an automobile.

The reason why it is suitable for a window of various vehicles, particularly of automobiles, is that in various vehicles, the glass plate becomes a high temperature especially at a parking lot in summer time, and the effects of the adhesive composition of the present invention excellent in durable adhesive properties can effectively be utilized.

EXAMPLES

EXAMPLES 1-1 and 1-2, and REFERENCE EXAMPLE 1

Using the following two types of adhesive compositions comprising maleic anhydride-modified polyolefins (adhesive solutions 1 and 2) and an adhesive composition comprising a chlorinated polyolefin (adhesive solution 3), the adhesive strengths were measured, whereby the adhesive properties of the chlorine-free adhesive compositions of the present invention (Examples 1-1 and 1-2) and the conventional chlorine-containing adhesive composition (Reference Example 1) were evaluated and shown in Table 1.

PRODUCTION OF MALEIC ANHYDRIDE-MODIFIED POLYOLEFINS 1 AND 2

100 g each of two types of propylene-1-butene copolymers 1 and 2 different in the content of propylene units, was dissolved in 1,900 g of toluene and heated to 150°C to have the copolymer dissolved. Then, maleic anhydride was added in such a proportion that the modification amount of maleic anhydride would be 3 parts by mass per 100 parts by mass of the obtainable maleic anhydride-modified polyolefin, and 1 g of a radical-forming agent (dicumyl peroxide, manufactured by Kayaku Akzo Corporation) was further added, followed by graft-polymerization at the same temperature for 3 hours to obtain maleic anhydride-modified polyolefin (referred to simply as "modified polyolefin" in Table 1) 1 or 2, respectively. Here, the content of propylene units in maleic anhydride-modified polyolefin 1 was 77 mol%, and the content of propylene units in maleic anhydride-modified polyolefin 2 was 69 mol%.

PREPARATION OF XYLENE SOLUTIONS (ADHESIVE SOLUTIONS 1 AND 2)

100 Parts by mass of each maleic anhydride-modified polyolefin thus obtained and 5 parts by mass of epoxysilane (3-glycidoxypropyl trimethoxysilane, KMB-403, manufactured by Shin-Etsu Chemical Co., Ltd.) as a silane coupling agent were mixed and dissolved in xylene to obtain a xylene solution (adhesive solution 1 or 2) having a solid content concentration as shown in Table 1.

REFERENCE EXAMPLE 1

PRODUCTION OF CHLORINATED POLYPROPYLENE

10 kg of isotactic polypropylene (MI: melt index 15) and 167 kg of chloroform were put in a reactor can having a pressure resistant glass lining applied, and heated and dissolved. Then, 0.1 kg of dicumyl peroxide was added, and 7.4 kg of chlorine gas was blown in and reacted. Then, after removal of chloroform, solidified chlorinated isotactic polypropylene (hereinafter referred to as "CPP-1") was obtained. The chlorine content in this CPP-1 was 25.9 mass%, and the weight-average molecular weight by GPC was from 140,000 to 150,000, and the crystallinity was 12%.

Further, chlorinated isotactic polypropylene (hereinafter referred to as "CPP-2" was produced in the same manner as the above CPP-1 except that the amount of chlorine gas blown in was changed to 6.2 kg. The chlorine content in this CPP-2 was 20 mass%, and the weight-average molecular weight by GPC was from 190,000 to 200,000, and the crystallinity was 44%.

PREPARATION OF XYLENE SOLUTION (ADHESIVE SOLUTION 3)

10.9 Parts by mass of CPP-1 and 87.5 parts by mass of CPP-2, as chlorinated polyolefins, and 17 parts by mass of trimethylolpropane triglycidyl ether (EPOLIGHT 100MF, manufactured by KYOEISHA CHEMICAL CO., LTD., epoxy equivalent: 135 to 145 g/eq) per 100 parts by mass of the total of CPP-1 and CPP-2, as an epoxy group-containing compound, were dissolved in xylene to prepare a xylene solution having a solid content concentration of 10 mass%. To 100 parts by mass of this solution, a mixed silane coupling agent of 3-aminopropyltrimethoxysilane and N-(2-aminoethyl)-3-aminopropyltrimethoxysilane (mass ratio of the two was 1:2) was added as a silane coupling agent in a proportion of 2.9 parts by mass per 100 parts by mass of the total of the chlorinated polyolefins and the epoxy group-containing compound, followed by thorough stirring to prepare a xylene solution (adhesive solution 3).

PHYSICAL PROPERTIES OF MALEIC ANHYDRIDE-MODIFIED POLYOLEFINS AND CHLORINATED POLYOLEFINS

The weight-average molecular weights, crystallinities and melting temperatures of the obtained maleic anhydride-modified polyolefins 1 and 2 were measured by the following methods, respectively. Further, the chlorine contents of chlorinated polypropylenes CPP-1 and CPP-2 were likewise measured by the following method. The results are shown in Table 1.

1. Measurement of weight-average molecular weight

The weight-average molecular weight was measured by gel permeation chromatography (GPC). Using Shodex GPC SYSTEM-21H (manufactured by Showa Denko K.K.) as the GPC apparatus and tetrahydrofuran as the solvent, the measurement was carried out at a measuring temperature of 40°C, and the weight-average molecular weight was calculated as standard polystyrene.

2. Measurement of crystallinity

Each of the obtained maleic anhydride-modified polyolefins 1 to 4 was formed into a film having a thickness of 1 mm, and after drying (at 60°C for 24 hours), the crystallinity was measured by a transmission method by using an X-ray diffraction apparatus (RINT2550, manufactured by Rigaku Corporation).

3. Measurement of melting temperature

Each of the obtained maleic anhydride-modified polyolefins 1 and 2 was measured by a differential scanning calorimetry by using DSC-60A (manufactured by Shimadzu Corporation).

4. Measurement of chlorine content

The measurement of the chlorine contents of the obtained chlorinated polyolefins CPP-1 and CPP-2 was carried out by potentiometric titration.

PRODUCTION OF GLASS PLATE WITH MOLDING (TEST SPECIMEN)

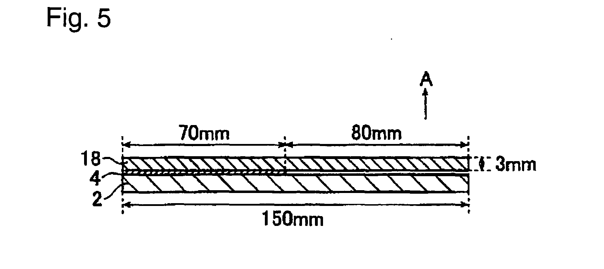

Firstly, a glass plate of 25 mm in width x 150 mm in length x 5 mm in thickness was prepared, and a fired product of a dark color ceramic paste or the like was provided on the glass surface by a conventional method.
Each of the adhesive solutions 1 and 2 obtained as described above, was applied up to 70 mm from one end in the length direction and over the entire region in the width direction of the glass plate prepared as described above having no glass primer applied, so that it would be 15 g/m$^2$ as calculated as the resin (thickness after drying of the adhesive layer: about 10 to 20 $\mu$m), followed by drying by supplying air, to obtain a glass plate 2 having an adhesive layer 4 formed as shown in Fig. 1.
By the method shown in Fig. 3, an olefin type thermoplastic elastomer material (SANTOPRENE 121-58W175, manufactured by Advanced Elastomer Systems Japan Ltd.) was extruded from an extrusion die having an opening which substantially corresponds to the cross-sectional shape of the molding 18 made of the thermoplastic elastomer shown in Fig. 4 or 5, and cool water was sprayed to the molding 18 made of the thermoplastic elastomer having the predetermined cross section immediately after the extrusion, and then heated air was blown to the surface facing the glass plate 2, of the molding 18 made of the thermoplastic elastomer. The molding 18 made of the thermoplastic elastomer immediately after the heating was inserted into the cavity of the pressing member 24, and at the same time, the glass plate 2 held by the robot was relatively moved so that the pressing member could be in alignment with the bonding portion of the molding 18 (the glass plate was moved in a transverse direction), whereby a glass plate with the molding made of the thermoplastic elastomer was obtained.
Here, the temperature of the bonding surface of the molding at the time of pressing was 170°C, and the glass temperature was 80°C.
The bonding portion in the glass plate surface was 70 mm from one end in the length direction and 5 mm in a the width direction, and the molding 18 made of the thermoplastic elastomer was bonded over the entire region in the length direction to obtain a glass plate with the molding made of the thermoplastic elastomer.
The width (width direction) of the bonding portion of the molding 18 made of the thermoplastic elastomer and the glass plate 2, was 5 mm, and the thickness of the molding 18 made of the thermoplastic elastomer was 3 mm.
The glass plate with the molding made of the thermoplastic elastomer thus obtained was specifically the one shown in Figs. 4 and 5. Fig. 4 is a top view illustrating the shape and size of the test specimen used for the evaluation test (peel strength test). Fig. 5 is a schematic cross-sectional view illustrating the shape and size of the test specimen used for the evaluation test (peel strength test). In Fig. 5, the adhesive layer 4 is shown with its thickness exaggerated. In Figs. 4 and 5, 2 represents the glass plate, 4 the adhesive layer, and 18 the molding made of a thermoplastic elastomer. A fired product of a dark ceramic paste (not shown) is located on the glass plate and beneath the adhesive layer 4.

MEASUREMENT OF INITIAL PEEL STRENGTH

The initial peel strength of each glass plate with a molding made of a thermoplastic elastomer thus obtained (test specimen) was measured by the following method. The results are shown in Table 1.
Each test specimen obtained, was left to stand at room temperature for 24 hours, and then a 90° peel test was carried out with a cross head moving rate of 300 mm/min in accordance with a float roller peel test prescribed by JIS K6854, whereby the initial peel strength (N/cm) was measured.
The apparatus used for the measurement was AUTOGRAPH AGS-J model apparatus (manufactured by Shimadzu Corporation).
In the above test, "in accordance with" means that the shape of the test specimen and the temperature condition are different, and in the test specimen for the initial peel strength in this Example, the bonding portion is 70x5 (mm) (see Figs. 4 and 5). The same will apply in each of the following durability tests.

In the initial peel strength test, the portion not bonded to the glass plate was bent at 90° (in Fig. 5, in the direction of arrow A, as stipulated in JIS K6854) and pulled for the measurement.

TABLE 1

| Adhesive solution 1 (Example 1-1) | | Adhesive solution 2 (Example 1-2) | | Adhesive solution 3 (Reference Example 1) | | |
|---|---|---|---|---|---|---|
| Modified polyolefin 1 | 100 parts by mass | Modified polyolefin 2 | 100 parts by mass | Chlorinated polyolefin and epoxy-containing compound | | 100 parts by mass |
| Propylene-α-olefin copolymer | Type 1 | Propylene-α-olefin copolymer | Type 2 | CPP-1 | Chlorine content 25.9 mass% | 10.9 parts by mass |
| | | | | CPP-2 | 20 mass% | 87.5 parts by mass |
| Content of propylene units | 77 mol% | Content of propylene units | 69 mol% | Trimethylolpropane triglycidyl ether | | 1.67 parts by mass |
| Modification amount of maleic anhydride | 3 parts by mass | Modification amount of maleic anhydride | 3 parts by mass | | | |
| Weight-average molecular | 50,000 | Weight-average molecular weight | 50,000 | | | |
| weight Crystallinity Melting temperature Tm | 50% 95 to 100°C | Crystallinity Melting temperature | 45% 90 to 95°C | | | |
| Solid content concentration in xylene solution | 10 mass% | Solid content concentration in xylene solution | 15 mass% | Solid content concentration in xylene solution | | 10 mass% |
| Epoxysilane | 5 parts by mass | Epoxysilane | 5 parts by mass | Mixed silane coupling agent | | 2.9 parts by mass |
| Adherend | Moldinq made of thermoplastic elastomer | | | | | |
| Glass plate | Provided with a fired product of a dark ceramic paste | | | | | |
| Initial peel strength (N/cm) | 57.6 | | 53.6 | | 52.0 | |

As a result, as shown in Table 1, the adhesive compositions of the present invention had adhesive strengths equal to or higher than the adhesive composition containing a chlorinated polyolefin and showed excellent adhesive properties.

EXAMPLES 2-1 to 2-3 an COMPARATIVE EXAMPLES 1 and 2

Then, durable adhesive strengths were evaluated with respect to a known chlorine-free adhesive composition and the (chlorine-free) adhesive composition employing no chlorine of the present invention, which have adhesive strengths equal to or higher than a chlorine type adhesive composition.

Namely, evaluation of various adhesive strengths was carried out by using a chlorine-free adhesive composition (AUROREN (registered tradename)) and adhesive compositions 1 and 2 comprising maleic anhydride-modified polyolefins 1 and 2, wherein the content of a propylene monomer is at least 50 mol%.

EXAMPLE 2-1

A glass plate with a molding made of a thermoplastic elastomer (test specimen) of Example 2-1 as shown in Figs. 4 and 5, was obtained in the same manner as in the above Example 1-1 using a xylene solution (adhesive solution 1) containing maleic anhydride modified polyolefin 1 as prepared in the above Example 1-1, except that a glass plate having a glass primer (#435-41, manufactured by SUNSTAR ENGINEERING, INC.) coated on a thin layer of a fired product of a dark ceramic paste, followed by drying, was used.

EXAMPLE 2-2

A glass plate with a molding made of a thermoplastic elastomer (test specimen) of Example 2-2, as shown in Figs. 4 and 5, was obtained in the same manner as in the above Example 1-2 using a xylene solution (adhesive solution 2) containing maleic anhydride-modified polyolefin 2 as prepared in the above Example 1-2, except that a glass plate having a glass primer (#435-41, manufactured by SUNSTAR ENGINEERING, INC.) coated on a thin layer of a fired product of a dark ceramic paste, followed by drying, was used.

EXAMPLE 2-3

A xylene solution (adhesive solution 2-2) containing maleic anhydride-modified polyolefin 2, was obtained in the same manner as in the above Example 1-2, except that no epoxysilane as a silane coupling agent was contained.
A glass plate with a molding made of a thermoplastic elastomer (test specimen) of Example 2-3, as shown in Figs. 4 and 5, was obtained in the same manner as in the above Example 1-2 except that such a xylene solution (adhesive solution 2-2) and a glass plate having a glass primer coated on a thin layer of a fired product of a dark ceramic paste, followed by drying, were used.

COMPARATIVE EXAMPLE 1

A glass plate with a molding made of a thermoplastic elastomer (test specimen) of Comparative Example 1, as shown in Figs. 4 and 5, was obtained in the same manner as in the above Example 1-1 except that an AUROREN solution 1 having 5 parts by mass of epoxysilane mixed to 100 parts by mass of a methylcyclohexane/methyl ethyl ketone mixed solution as a commercially available chlorine-free adhesive composition (AUROREN (registered trademark) 250-MX, solid content concentration: 15.4 mass%), and a glass plate having a glass primer coated on a thin layer of a fired product of a dark ceramic paste, followed by drying, were used.

COMPARATIVE EXAMPLE 2

100 Parts by mass of a methylcyclohexane/methyl ethyl ketone mixed solution as a commercially available chlorine-free adhesive composition (AUROREN (registered trademark) 250-MX, solid content concentration: 15.4 mass%) was prepared (AUROREN solution 2).
A glass plate with a molding made of a thermoplastic elastomer (test specimen) of Comparative Example 2, as shown in Figs. 4 and 5, was obtained in the same manner as in the above Example 1-1 except that such AUROREN solution 2 containing no epoxysilane and a glass plate having a glass primer coated on a thin layer of a fired product of a dark ceramic paste, followed by drying, were used.
Using each glass plate with a molding made of a thermoplastic elastomer (test specimen) obtained as described above, the initial peel strength test, heat resistance test, moisture resistance test, warm water resistance test, hot water resistance test and weather resistant test were carried out, and the adhesive strength was measured. The results are shown in Table 2. Here, with respect to a test wherein the peel strength could not be measured, "-" was put in the corresponding space in Table 2.

1. Measurement of initial peel strength

Measured in the same manner as the measurement of the initial peel strength in the above Example 1-1

2. Heat resistance test

Each test specimen was left to stand at room temperature for 24 hours, then heated at 90°C for 240 hours and further left to stand at room temperature for 24 hours, whereupon a 90° peel test was carried out in accordance with JIS K6854, whereby the peel strength (N/cm) after the heat resistance test was measured.

3. Moisture resistance test

Each test specimen was left to stand at room temperature for 24 hours, then left to stand under conditions of 50°C and a humidity of 95 RH% for 240 hours and further left to stand at room temperature for 24 hours, whereupon 90° peel test was carried out in accordance with JIS K6854, whereby the peel strength after the moisture resistance test (N/cm) was measured.

4. Warm water resistance test

Each test specimen was left to stand at room temperature for 24 hours, then immersed in warm water of 40°C for 240 hours and further left to stand at room temperature for 24 hours, whereupon a 90° peel test was carried out in accordance with JIS K6854, whereby the peel strength after the warm water resistance test (N/cm) was measured.

5. Hot water resistance test

Each test specimen was left to stand at room temperature for 24 hours, then immersed in hot water of 80°C for 96 hours and further left to stand at room temperature for 24 hours, whereupon a 90° peel test was carried out in accordance with JIS K6854, whereby the peel strength after the hot water resistance test (N/cm) was measured.

6. Weather resistance test

Each test specimen was subjected to a total of nine cycles, where each cycle included the following steps 1) to 5). Then, the test specimen was left to stand at room temperature for 24 hours, and at room temperature, the peel strength (the weather resistance test, N/cm) was measured in the same manner as in the measurement of the initial peel strength in the above Example 1-1.

1) A test specimen was irradiated with ultraviolet rays at 50°C under a relative humidity of 95 RH% with a dose of 80 mW/cm$^2$ for 4 hours. Here, the irradiation apparatus was METAL WEATHER (KU-R4CI-A), manufactured by DAIPLA WINTES CO., LTD., the lamp was Metal Halide Lamp (MW-60W), manufactured by DAIPLA WINTES CO., LTD., and the filter was KF-2 manufactured by DAIPLA WINTES CO., LTD.
2) The test specimen was left to stand for 4 hours at 50°C under a humidity of 95 RH% without irradiation with ultraviolet rays.
3) The test specimen was showered with water for 10 seconds.
4) The test specimen was left to stand for 4 hours at 50°C under a humidity of 95 RH% without irradiation with ultraviolet rays.
5) The test specimen was showered with water for 10 seconds.

TABLE 2

| | Example 2-1 | Example 2-2 | Example 2-3 | Comparative Example 1 | Comparative Example 2 |
|---|---|---|---|---|---|
| Modified polyolefin (parts by mass) | Type 1 100 | Type 2 100 | Type 2 100 | AUROREN 100 | AUROREN 100 |
| Epoxysilane (parts by mass) | 5 | 5 | - | 5 | - |
| Glass plate | Dark color ceramics | Dark color ceramics | Dark color ceramics | Dark color ceramics | Dark color ceramics |
| Glass primer | Present | Present | Present | Present | Present |
| Initial peel strength (N/cm) | 54.5 | 46.9 | 51.7 | 17.1 | 16.8 |

(continued)

| | Example 2-1 | Example 2-2 | Example 2-3 | Comparative Example 1 | Comparative Example 2 |
|---|---|---|---|---|---|
| Heat resistance (N/cm) test | 58.4 | 50.0 | 52.1 | - | - |
| Moisture resistance test (N/cm) | 54.5 | 50.5 | 53.1 | - | - |
| Warm water resistance test (N/cm) | 53.6 | 49.3 | 49.9 | - | - |
| Hot water resistance test (N/cm) | 57.9 | 53.6 | 53.8 | - | - |
| Weather resistance test (N/cm) | 55.6 | 54.2 | 57.5 | - | - |

As is apparent from Table 2, when the compositions of the present invention comprising maleic anhydride-modified polyolefins wherein the content of propylene units was at least 50 mol%, an adequate adhesive strength was obtained in each test.

On the other hand, one employing AUROREN (registered trademark) as a chlorine-free adhesive composition showed no adhesive strength in each test.

EXAMPLES 3-1 to 3-8

Then, durable adhesive strengths were evaluated with respect to cases where a silane coupling agent was added and not added to the adhesive composition of the present invention, and with respect to cases where a glass primer was applied and not applied to the glass plate. Further, the evaluation was carried out also with respect to cases where a fired product of a dark color ceramic paste is formed and not formed on the glass plate.

EXAMPLE 3-1

A methylcyclohexane/ethyl acetate mixed solution containing maleic anhydride-modified polyolefin 2 (adhesive solution 2-3) which contains no epoxysilane as a silane coupling agent, was obtained in the same manner as in the above Example 2-3 except that instead of xylene as an organic solvent, a mixture of methylcyclohexane and ethyl acetate was employed.

A glass plate with a molding made of a thermoplastic elastomer (test specimen) of Example 3-1, as shown in Figs. 4 and 5, was obtained in the same manner as in the above Example 2-3 except that such a methylcyclohexane/ethyl acetate mixed solution (adhesive solution 2-3) and a glass plate having no glass primer coated on a thin layer of a fired product of a dark color ceramic paste, were employed.

EXAMPLE 3-2

A glass plate with a molding of a thermoplastic elastomer (test specimen) of Example 3-2, as shown in Figs. 4 and 5, was obtained in the same manner as in the above Example 3-1 except that a glass plate having no fired product of a dark color ceramic paste formed or no glass primer coated, was employed.

EXAMPLE 3-3

A methylcyclohexane/ethyl acetate mixed solution containing maleic anhydride-modified polyolefin 2 (adhesive solution 2-4) was obtained in the same manner as in the above Example 2-2 except that the content of epoxysilane (3-glycidoxypropyltrimethoxysilane, KMB-403, manufactured by Shin-Etsu Chemical Co., Ltd.) as a silane coupling agent was changed to 18 parts by mass, and instead of xylene as an organic solvent, a mixture of methylcyclohexane and ethyl acetate was employed.

A glass plate with a molding made of a thermoplastic elastomer (test specimen) of Example 3-3, as shown in Figs. 4 and 5, was obtained in the same manner as in the above Example 2-2 except that such a methylcyclohexane/ ethyl acetate mixed solution (adhesive solution 2-4), and a glass plate having no glass primer coated on a thin layer of a fired product of a dark color ceramic paste, was employed.

EXAMPLE 3-4

A glass plate with a molding made of a thermoplastic elastomer (test specimen) of Example 3-4, as shown in Figs. 4 and 5, was obtained in the same manner as in the above Example 3-3, except that a glass plate having no fired product of a dark ceramic paste formed and no glass primer coated, was employed.

EXAMPLE 3-5

A glass plate with a molding made of a thermoplastic elastomer (test specimen) of Example 3-5, as shown in Figs. 4 and 5, was obtained in the same manner as in the above Example 3-1 employing a methylcyclohexane/ethyl acetate mixed solution containing maleic anhydride modified polyolefin 2 (adhesive solution 2-3) containing no epoxysilane, prepared in the above Example 3-1, except that a glass plate having a glass primer (#435-41, manufactured by SUNSTAR ENGINEERING, INC.) coated on a thin film of a fired product of a dark color ceramic paste, followed by drying, was employed.

EXAMPLE 3-6

A glass plate with a molding made of a thermoplastic elastomer (test specimen) of Example 3-6, as shown in Figs. 4 and 5, was obtained in the same manner as in the above Example 3-5, except that a glass plate having a glass primer coated and dried without forming a fired product of a dark ceramic paste, was employed.

EXAMPLE 3-7

A glass plate with a molding made of a thermoplastic elastomer (test specimen) of Example 3-7, as shown in Figs. 4 and 5, was obtained in the same manner as in the above Example 3-3 employing a methylcyclohexane/ethyl acetate mixed solution containing maleic anhydride-modified polyolefin 2 (adhesive solution 2-4) containing 18 parts by mass of epoxysilane, prepared in the above Example 3-3, except that a glass plate having a glass primer coated on a thin layer of a fired product of a dark ceramic paste, followed by drying, was employed.

EXAMPLE 3-8

A glass plate with a molding made of a thermoplastic elastomer (test specimen) of Example 3-8, as shown in Figs. 4 and 5, was obtained in the same manner as in the above Example 3-7, except that a glass plate having a glass primer coated and dried without forming a fired product of a dark ceramic paste, was employed.

Using each glass plate with a molding made of a thermoplastic elastomer (test specimen) obtained as described above, the initial peel strength test, heat resistance test, moisture resistance test and hot water resistance test were carried out, and the adhesive strengths were measured, in the same manner as the measuring methods in Examples 2-1 to 2-3. The results are shown in Table 3. Further, with respect to a test wherein it was impossible to measure the peel strength, "-" was put in the corresponding space in Table 3.

TABLE 3

|  | Example 3-1 | Example 3-2 | Example 3-3 | Example 3-4 | Example 3-5 | Example 3-6 | Example 3-7 | Example 3-8 |
|---|---|---|---|---|---|---|---|---|
| Modified polyolefin (parts by mass) | Type 2 100 | Type 2 100 | Type 2 100 | Type 2 100 | Type 2 100 | Type 2 100 | Type 2 100 | Type 2 100 |

(continued)

| | Example 3-1 | Example 3-2 | Example 3-3 | Example 3-4 | Example 3-5 | Example 3-6 | Example 3-7 | Example 3-8 |
|---|---|---|---|---|---|---|---|---|
| Epoxysilane (parts by mass) | - | - | 18 | 18 | - | - | 18 | 18 |
| Glass primer | - | - | - | - | Present | Present | Present | Present |
| Dark color ceramic | Present | - | Present | - | Present | - | Present | - |
| Initial peel strength (N/cm) | 46.4 | 35.7 | 53.2 | 49.4 | 51.5 | 50.0 | 50.4 | 50.0 |
| Heat resistance test (N/cm) | - | - | 47.6 | 36.5 | 35.3 | 52.8 | 52.1 | 51.9 |
| Moisture resistance test (N/cm) | - | - | 18.5 | 1.7 | 51.3 | 52.1 | 51.3 | 51.2 |
| Hot water resistance test (N/cm) | - | - | 24.5 | 3.9 | 51.9 | 11.6 | 50.9 | 51.2 |

As is apparent from Tables 2 and 3, even in a case where no epoxysilane was incorporated in the adhesive solution of Example 3-1 in Table 3 and no glass primer was applied to the glass plate, a higher adhesive strength was obtained even in the initial peel strength than AUROREN in a case where a glass primer is applied to the glass plate in Comparative Example 1 or Comparative Example 2 in Table 2.

Further, as is apparent from Table 3, from the comparison between Examples 3-1 and 3-2 and Examples 3-3 and 3-4, when an epoxysilane is incorporated to the adhesive solution, the adhesive strength is improved in the heat resistance test, moisture resistance test and hot water resistance test.

Further, from the comparison between Examples 3-3 and 3-4 and Examples 3-5 and 3-6, it is apparent that even if no epoxysilane is incorporated to the adhesive solution, if a glass primer is applied to the glass plate, the adhesive strength is further improved in the heat resistance test, moisture resistance test and hot water resistance test.

Further, from the comparison between Examples 3-5 and 3-6 and Examples 3-7 and 3-8, it is apparent that when an epoxysilane is incorporated to adhesive solution, and a glass primer is applied to the glass plate, the adhesive strength is further improved in the heat resistance test in a case where a fired product of a dark color ceramic paste is formed, or in the hot water resistance test in a case where no fired product of a dark color ceramic paste is formed.

Further, as between a case where the bonding is carried out on a fired product of a dark color ceramic paste and a case where the bonding is carried out directly on the glass plate, the adhesive strength is inferior in the case where the bonding is carried out directly on the glass plate. However, as in Examples 3-7 and 3-8, by using an epoxysilane and a glass primer in combination, even in a case where the bonding is carried out directly on the glass plate, it becomes possible to obtain a adhesive strength equal to a case where the bonding is carried out on a fired product of a dark color ceramic paste.

INDUSTRIAL APPLICABILITY

The chlorine-free adhesive composition of the present invention is useful for bonding a thermoplastic elastomer to glass and provides a high initial adhesive strength and adequate adhesive properties.

Further, a glass plate with a molding made of a thermoplastic elastomer of the present invention is firmly bonded when a molding made of a thermoplastic elastomer is bonded along the peripheral portion of a glass plate by means of the chlorine-free adhesive composition of the present invention. Further, by incorporating a silane coupling agent to the chlorine-free adhesive composition of the present invention, or by applying a glass primer to the glass plate, the glass plate with a molding made of a thermoplastic elastomer will have adequate durable adhesive strengths and thus may suitably be used particularly for e.g. automobile components to be used in a severe environment.

The entire disclosure of Japanese Patent Application No. 2004-026710 (filed on February 3, 2004) including specification, claims, drawings and summary is incorporated herein by reference in its entirety.

**Claims**

1.  An adhesive composition for use in the adhesion of a thermoplastic elastomer and a glass article, which comprises a modified polyolefin obtained by graft-copolymerizing at least one member selected from an $\alpha,\beta$-unsaturated carboxylic acid and an acid anhydride thereof, to a propylene-$\alpha$-olefin copolymer.

2.  The adhesive composition according to Claim 1, wherein the content of propylene units in the propylene-$\alpha$-olefin copolymer is at least 50 mol%.

3.  The adhesive composition according to Claim 1 or 2, wherein the modified polyolefin has a weight-average molecular weight of from 10,000 to 100,000.

4.  The adhesive composition according to any one of Claims 1 to 3, wherein the modified polyolefin has a crystallinity of from 10 to 70%.

5.  The adhesive composition according to any one of Claims 1 to 4, which contains from 0.1 to 30 parts by mass of a silane coupling agent per 100 parts by mass of the modified polyolefin.

6.  A glass plate with a molding made of a thermoplastic elastomer, which comprises a glass plate and a molding made of a thermoplastic elastomer, integrated to a peripheral portion of the glass plate, via an adhesive layer formed from the adhesive composition as defined in any one of Claims 1 to 5.

7.  The glass plate with a molding made of a thermoplastic elastomer according to Claim 6, wherein the peripheral portion of the glass plate is coated with a glass primer.

8.  The glass plate with a molding made of a thermoplastic elastomer according to Claim 6 or 7, wherein the molding made of a thermoplastic elastomer is formed by extrusion.

9.  The glass plate with a molding made of a thermoplastic elastomer according to Claim 6 or 7, wherein the molding made of a thermoplastic elastomer is formed by injection molding.

10. The glass plate with a molding made of a thermoplastic elastomer according to any one of Claims 6 to 9, wherein the glass plate is a window glass plate for an automobile.

Fig. 1

Fig. 2

Fig. 3

Fig. 4

Fig. 5

## INTERNATIONAL SEARCH REPORT

| | International application No. |
|---|---|
| | PCT/JP2005/001609 |

A. CLASSIFICATION OF SUBJECT MATTER
   Int.Cl⁷ C09J123/26, C09J151/06, B60J1/00

According to International Patent Classification (IPC) or to both national classification and IPC

B. FIELDS SEARCHED

Minimum documentation searched (classification system followed by classification symbols)
   Int.Cl⁷ C09J123/26, C09J151/06, B60J1/00

Documentation searched other than minimum documentation to the extent that such documents are included in the fields searched
   Jitsuyo Shinan Koho        1922-1996    Toroku Jitsuyo Shinan Koho    1994-2005
   Kokai Jitsuyo Shinan Koho   1971-2005    Jitsuyo Shinan Toroku Koho    1996-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 59-86651 A (Sumitomo Chemical Co., Ltd.),<br>18 May, 1984 (18.05.84),<br>Claims; page 3, upper left column to lower right column; page 4, lower left column to page 5, lower left column<br>(Family: none) | 1-5<br>6-10 |
| X<br>Y | JP 59-159843 A (Sumitomo Chemical Co., Ltd.),<br>10 September, 1984 (10.09.84),<br>Claims; page 2, lower right column to page 3, lower right column; page 4, lower right column to page 5, lower right column<br>(Family: none) | 1-5<br>6-10 |

| [X] Further documents are listed in the continuation of Box C. | [ ] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 March, 2005 (02.03.05) | Date of mailing of the international search report<br>22 March, 2005 (22.03.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/001609 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 59-159844 A  (Sumitomo Chemical Co., Ltd.),<br>10 September, 1984 (10.09.84),<br>Claims; page 3, upper right column to page 4,<br>upper right column; page 5, lower right column<br>to page 6, lower right column<br>(Family: none) | 1-5<br>6-10 |
| Y | JP 62-260845 A  (Du Pont-Mitsui Polychemicals<br>Co., Ltd.),<br>13 November, 1987 (13.11.87),<br>Claims; page 4, lower left column to lower<br>right column<br>(Family: none) | 1-10 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000079626 A
- JP 2004240122 A
- JP 2004026710 A

**Non-patent literature cited in the description**

- Shunji Sekiguchi. *Kabushiki Kaisha,* March 2003, vol. 49 (3), 115-119